# EUROPÄISCHE PATENTSCHRIFT

(11) **EP 2 139 085 B1**
(45) Veröffentlichungstag und Bekanntmachung des Hinweises auf die Patenterteilung: **03.08.2011**
(21) Anmeldenummer: 08158753.7
(22) Anmeldetag: 23.06.2008
(51) Int. Cl.: H02B 1/052

(54) **Gehäuse mit Verriegelungselement**
Casing with lock element
Boîtier doté d'un élément de fermeture

(43) Veröffentlichungstag der Anmeldung: 30.12.2009
(73) Patentinhaber: ABB Schweiz AG, 5400 Baden (CH)
(72) Erfinder: Busenhart, Thomas, CH-8207, Schaffhausen (CH); Scheffer, Katja, CH-8207, Schaffhausen (CH)
(74) Vertreter: ABB Patent Attorneys

(56) Entgegenhaltungen:
- EP-A- 0 785 607
- DE-A1- 10 211 903
- DE-B3- 10 220 821

## Beschreibung

### Technisches Gebiet

Die Erfindung bezieht sich auf das Gebiet der Gehäuse für elektrische Installationsgeräte, insbesondere der Gehäuse für Niederspannungsschaltgeräte bis 1000 V wie Reiheneinbaugeräte, Leitungsschutzschalter, Fehlerstromschutzschalter, Relais, Ein- und Ausschalter, Signalapparate oder Steuerschalter. Die Erfindung bezieht sich insbesondere auf ein Gehäuse gemäss dem Oberbegriff von Anspruch 1.

### Stand der Technik

Aus DE 35 13 762 A1 ist ein derartiges Gehäuse bekannt. Dieses bekannte Gehäuse ist mittels einem quer zu einer Tragschiene verschiebbaren Verriegelungselement an dieser Tragschiene fixierbar. Das Verriegelungselement ist rahmenartig aufgebaut. An seinen zwei seitlichen Rahmenschenkeln weist es vier leistenartige Anformungen auf, welche dazu bestimmt sind, das Verriegelungselement verschiebbar am Gehäuse zu halten. Die beiden Rahmenschenkel sind über zwei Endschenkel miteinander verbunden, wobei der eine Endschenkel einen nasenartigen Vorsprung mit einer Klemmfläche aufweist, die dazu bestimmt ist, zum Fixieren des Gehäuses an der Tragschiene anzugreifen. Die leistenartigen Anformungen greifen in Führungsnuten am Gehäuse ein. Nachteilig an dieser Ausführungsform ist, dass die leistenartigen Anformungen massiv ausgebildet werden müssen, sodass die zum Fixieren des Gehäuses nötige Kraft von den leistenartigen Anformungen auf das Gehäuse übertragen werden kann.

Aus dem Dokument EP 785 607 ist ein Installationsgerät bekannt, welches mit einem schieberartigen Verriegelungselement auf einer Tragschiene fixiert wird. Auch in DE 102 11 903 A1 und DE 102 20 821 B3 werden ähnliche Verriegelungselemente für Installationsgeräte beschrieben.

### Kurze Darstellung der Erfindung

Die Aufgabe der Erfindung besteht darin, ein Gehäuse mit einem verbesserten Verriegelungselement zu schaffen.

Die obige Aufgabe wird erfindungsgemäss durch ein Gehäuse mit den Merkmalen des Anspruchs 1 gelöst.

Erfindungsgemäss weist das Gehäuse ein Verriegelungselement auf, an welchem die erste Klemmfläche und die zweite Klemmfläche einander gegenüberliegend angeordnet sind. Dadurch wird erreicht, dass nahezu kein Drehmoment auf das Verriegelungselement übertragen wird, beziehungsweise von diesem aufgenommen werden muss. Dadurch ist es möglich, die Führungselemente, mittels welchen das Verriegelungselement am Gehäuse gehalten ist, im Vergleich zum Stand der Technik weniger stark auszubilden.

Bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand eines bevorzugten Ausführungsbeispielen näher erläutert, welche in den beiliegenden Figuren dargestellt sind. Es zeigen rein schematisch:
- Fig. 1: in Ansicht das erfindungsgemässe Gehäuse aufgerastet auf einer geschnitten gezeigten Tragschiene gemäss einer ersten Ausführungsform, wobei ein Verriegelungselement in seiner Fixierstellung gezeigt ist;
- Fig. 2: in Ansicht das erfindungsgemässe Gehäuse aufgerastet auf einer geschnitten gezeigten Tragschiene gemäss einer zweiten Ausführungsform, wobei ein Verriegelungselement in seiner Fixierstellung gezeigt ist;
- Fig. 3: in Ansicht das erfindungsgemässe Gehäuse in Anlage an die geschnitten gezeigten Tragschiene, wobei das Verriegelungselement in seiner Montagestellung gezeigt ist;
- Fig. 4: in Schnittdarstellung das Verriegelungselement; und
- Fig. 5: das Verriegelungselement in perspektivischer Darstellung.

### Weg zur Ausführung der Erfindung

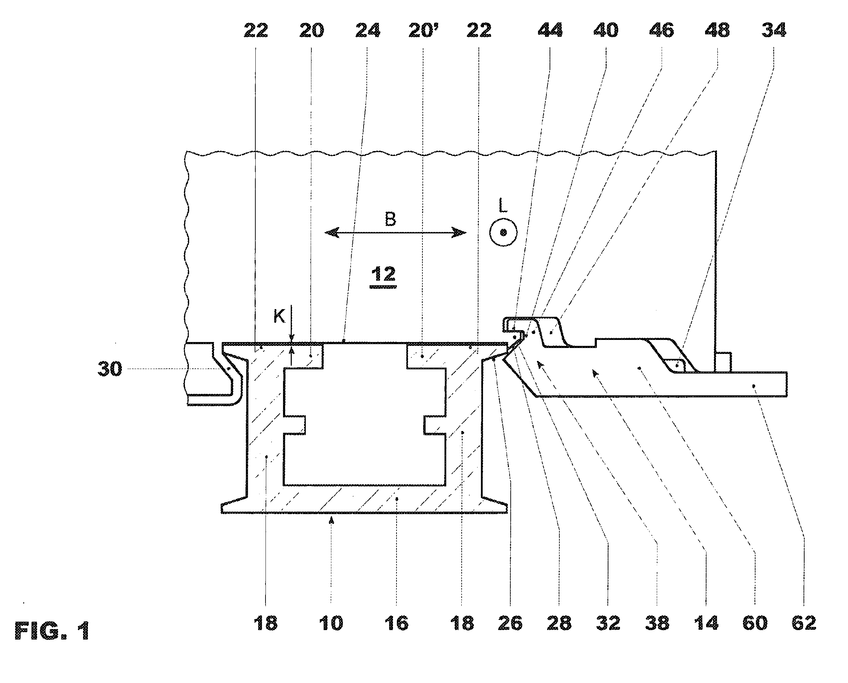

Fig. 1 bis 3 zeigen eine Tragschiene 10 sowie ein erfindungsgemässes Gehäuse 12 für elektrische Installationsgeräte. Derartige Gehäuse 12 werden insbesondere für Niederspannungsschaltgeräte verwendet wie beispielsweise Leitungsschutzschalter, Fehlerstromschutzschalter, Fehlerstrom-Signalgeber, Lastschalter und Relais wie auch für Zusatzmodule für die vorgenannten Installationsgeräte.

Die Gehäuse 12 derartiger Installationsgeräte können je nach Funktion wie Leitungsschutzschalter oder Fehlerstromschutzschalter unterschiedliche Gehäuseformen aufweisen. Die Gehäuserückseiten, an welchen die Gehäuse der Installationsgeräte auf der gemeinsamen Tragschiene montiert werden, weisen jedoch trotz unterschiedlicher Gehäuseform eine zumindest ähnliche Form auf. Derjenige Bereich der Gehäuse, welcher jeweils ähnlich ausgebildet ist, ist insbesondere in Fig. 1 bis 3 gezeigt. Ähnliche Gehäuse 12 können insbesondere eine unterschiedliche Länge aufweisen, wobei die Längsrichtung L des Gehäuses 12, falls dieses auf die Tragschiene 10 aufgerastet ist, in Längsrichtung L der Tragschiene 10 verläuft. Mehrere Gehäuse 12 werden in Längsrichtung L der Tragschiene 10 aneinander gereiht und auf dieser mittels eines nachfolgend beschriebenen Verriegelungselements 14 befestigt.

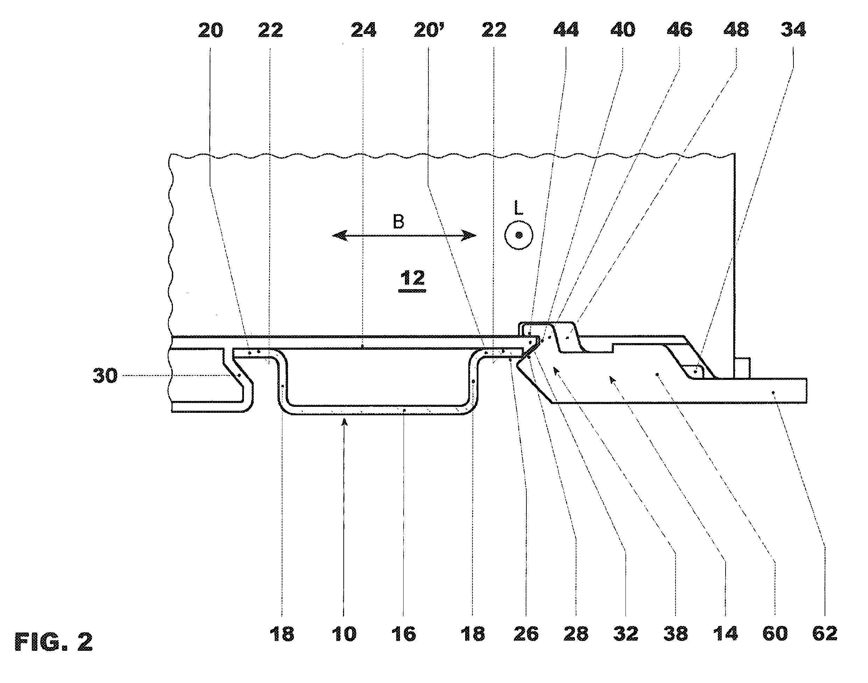

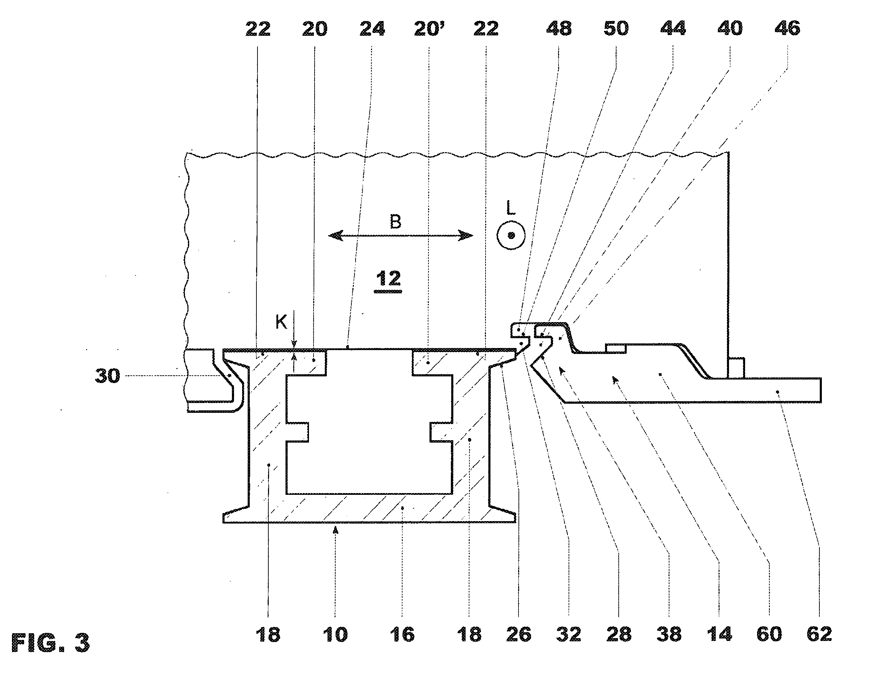

Die Tragschiene 10, welche auch als Hutschiene bezeichnet wird und beispielsweise in der Norm DIN EN 60715 genormt ist, weist eine flächige Montageplatte 16 auf, mittels welcher die Tragschiene 10 beispielsweise in einem Sicherungskasten oder dergleichen befestigt wird. In Fig. 1 bis 3 verläuft diese Montageplatte 16 rechtwinklig zur Zeichenebene. Von dieser Montageplatte 16 stehen seitlich zwei Befestigungsarme 18 ab, an deren freien Enden je eine Befestigungsplatte 20, 20' angeformt ist. Die beiden von der Montageplatte 16 abgewandten Flächen der Befestigungsplatten 20, 20' bilden zusammen eine Gegenanschlagfläche 22 für eine am Gehäuse 12 ausgebildete Anschlagfläche 24. Wie in Fig. 1 und 3 dargestellt, weist jede Befestigungsplatte 20, 20' einen gegen aussen, das heisst weg von der anderen Befestigungsplatte 20, 20', in Richtung der Kante der Befestigungsplatte 20, 20' sich verjüngenden Bereich auf, wobei die Gegenanschlagfläche 22 eben ist. Die durch die Verjüngung gegenüber der Gegenanschlagfläche 20, 20' abgewinkelt angeordnete Fläche bildet eine erste Gegenklemmfläche 26, welche zum Fixieren des Gehäuses 12 an der Tragschiene 10 mit einer ersten Klemmfläche 28 am Verriegelungselement 14 zusammen wirkt. Wie in Fig. 2 dargestellt, kann alternativ die Gegenklemmfläche 26 auch parallel zur Gegenanschlagfläche 22 ausgerichtet sein. In den in Fig. 1 bis 3 gezeigten Ausführungsbeispielen ist die Tragschiene 10 symmetrisch ausgebildet und weist folglich je Befestigungsplatte 20, 20' eine erste Gegenklemmfläche 26 auf. Da jedoch wie nachfolgend beschrieben und in Fig. 1 bis 3 gezeigt, das Gehäuse 12 nicht symmetrisch ausgebildet ist, wäre auch eine nicht symmetrische Ausbildung der Tragschiene 10 möglich, die nur eine erste Gegenklemmfläche 26 gemäss der obigen Beschreibung aufweist.

Die Anschlagfläche 24 des Gehäuses 12 weist eine Breite auf, die dem Abstand der beiden aussen liegenden Kanten der beiden Befestigungsplatten 20, 20' entspricht. In Richtung der Breite B, rechtwinklig zur Längsrichtung L, grenzt einerseits ein starr ausgebildeter Haltehaken 30 an die Anschlagfläche 24 an, der dazu bestimmt ist, die eine der beiden Befestigungsplatten 20 in bekannter Art und Weise zu hintergreift. Andererseits grenzt an die Anschlagfläche 24 ein im Vergleich zum Haltehaken 30 kleiner, nasenartiger Vorsprung 32 an. Zusammen mit dem Haltehaken 30 begrenzt der nasenartige Vorsprung 32 seitlich - in Richtung der Breite B - die Anschlagfläche 24 und hält in Richtung der Breite B das Gehäuse 12 unverschiebbar an der Tragschiene 10.

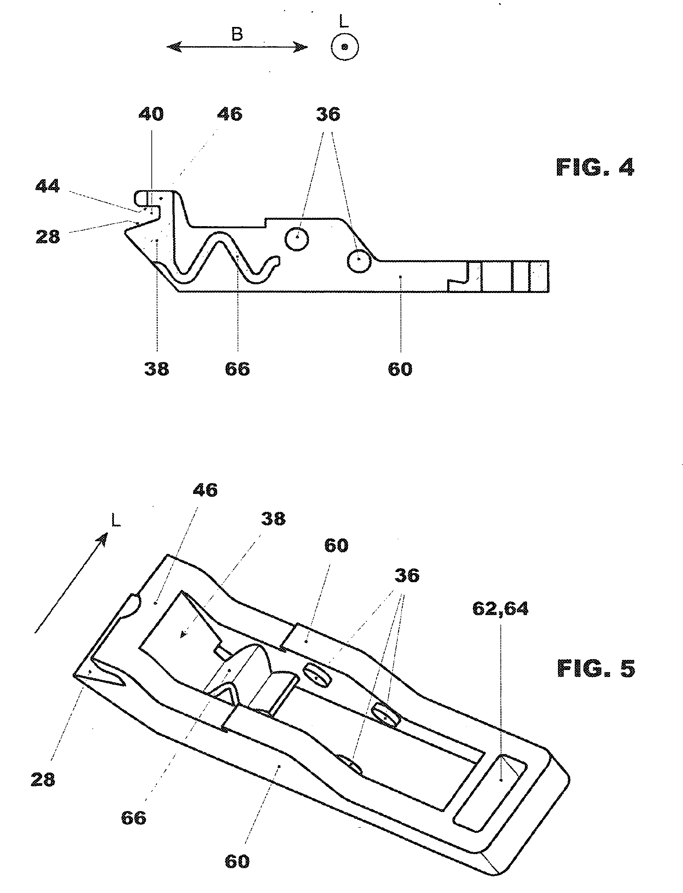

Um das Gehäuse 12 fest an der Tragschiene 10 zu fixieren, ist aussen am Gehäuse 12 das verschiebbar ausgebildete Verriegelungselement 14 angeordnet. Das in Fig. 1 bis 5 gezeigte Verriegelungselement 14 ist quer zur Längsrichtung L beziehungsweise in Richtung der Bereite B des Gehäuses von einer Montagestellung in eine Fixierstellung hin und her verschiebbar am Gehäuse gehalten, wobei das Gehäuse 12 hierzu Führungsnuten 34 (in Fig. 1 und 2 ist eine der Führungsnuten sichtbar) und das Verriegelungselement 14 entsprechende, in die Führungsnuten 34 eingreifende Führungselemente 36 aufweist (siehe Fig. 4, 5).

Der in Bewegungsrichtung des Verriegelungselements 14 der Anschlagfläche 24 zugewandte Endbereich 38 des Verriegelungselements 14 weist eine in Längsrichtung L des Gehäuses 12 verlaufende Nut 40 auf, deren eine Flanke die erste Klemmfläche 28 und deren andere Flanke eine zweite Klemmfläche 44 bildet. Die beiden Flanken sind über den Nutboden miteinander Verbunden. Die erste Klemmfläche 28 begrenzt einen Bereich des Verriegelungselements 14, der in der Fixierstellung des Verriegelungselements 14 die Gegenanschlagfläche 22 der Tragschiene 10 hintergreift. In der in Fig. 1 dargestellten Ausführungsform der Tragschiene 10 wirkt in der Fixierstellung des Verriegelungselements 14 die erste Klemmfläche 28 mit der ersten Gegenklemmfläche 26 der Tragschiene 10 zusammen. In der in Fig. 2 dargestellten Ausführungsform der Tragschiene 10 wirkt in der Fixierstellung des Verriegelungselements 14 die erste Klemmfläche 28 zumindest mit der Kante der ersten Gegenklemmfläche 26 zusammen. Die zweite Klemmfläche 44 begrenzt einen hakenartigen Bereich 46 des Verriegelungselements 14, der in der Fixierstellung des Verriegelungselements 14 die Anschlagfläche 24 des Gehäuses 12 hintergreift. Hierzu weist das Gehäuse 12 eine Ausnehmung 48 auf, in welche der hakenartige Bereich 46 des Verriegelungselements 14 eingreift. Die Ausnehmung 48 ist in Längsrichtung L beidseitig offen. Weiter sind die Ausnehmung 48 und der hakenartige Bereich 46 derart ausgebildet, dass der hakenartige Bereich 46 beim Verschieben des Verriegelungselements 14 zwischen der Montagestellung und der Fixierstellung in dieser Ausnehmung 48 hin und her beweglich ist. Weiter ist die Ausnehmung 48 derart ausgebildet, dass der hakenartige Bereich 46 beim Aufsetzten auf das Gehäuse 12 beziehungsweise beim Montieren des Verriegelungselements 14 am Gehäuse 12 in die Ausnehmung 48 eingeführt werden kann.

In der Fixierstellung des Verriegelungselements 14 hintergreift der hakenartige Bereich 46 des Verriegelungselements 14 den nasenartigen Vorsprung 32 und die Anschlagfläche 24 des Gehäuses 12 zumindest teilweise und die zweite Klemmfläche 44 des Verriegelungselements 14 wirkt mit einer am Gehäuse 12 ausgebildeten zweiten Gegenklemmfläche 50 zusammen. Die zweite Gegenklemmfläche 50 am Gehäuse 12 begrenzt die Ausnehmung 48 in Richtung der Anschlagfläche 24 und ist parallel zur Anschlagfläche 24 angeordnet.

Durch das Zusammenwirken der ersten Klemmfläche 28 des Verriegelungselements 14 mit der ersten Gegenklemmfläche 26 an der Tragschiene 10 und durch das Zusammenwirken der zweiten Klemmfläche 44 des Verriegelungselements 14 mit der zweiten Gegenklemmfläche 50 am Gehäuse 12 wird die Anschlagfläche 24 des Gehäuses 12 fest an die Gegenanschlagfläche 22 an der Tragschiene 10 gepresst und folglich das Gehäuse 12 fest an der Tragschiene 10 fixiert. Folglich wird durch den Endbereich 38 des Verriegelungselements 14, der die Nut 40 aufweist, eine Haltekraft erzeugt, welche die Anschlagfläche 24 fest an die Gegenanschlagfläche 22 drückt. Die Richtung K dieser Haltekraft steht im Wesentlichen senkrecht auf der Anschlagsfläche 24 und der Gegenanschlagfläche 22. Damit die Haltekraft vollständig zum Zusammenpressen der Anschlagfläche 24 und der Gegenanschlagfläche 22 genutzt wird, ist der nasenartige Vorsprung 32 derart ausgebildet, dass der nasenartige Vorsprung 32 in der Fixierposition des Verriegelungselements 14 dieses nicht berührt, das heisst, dass in der Fixierposition des Verriegelungselements 14 der nasenartige Vorsprung 32 von der ersten Klemmfläche 28 beabstandet ist.

Besonders vorteilhaft ist die Anordnung der ersten Klemmfläche 28 und der zweiten Klemmfläche 44 als Flanken der Nut 40, da dadurch die Kraftübertragung in einem relativ kleinen Bereich am Verriegelungselement 14 erfolgt. Weiter sind die erste Klemmfläche 28 und die zweite Klemmfläche 44 in Richtung der Haltekraft K gegenüberliegend angeordnet. Dies führt dazu, dass das Verriegelungselement 14 nur ein sehr kleines Drehmoment aufnehmen muss. Folglich kann des Verriegelungselement 14 mit Ausnahme des Endbereichs 38, an welchem die Nut 40 mit der ersten Klemmfläche 28 und der zweiten Klemmfläche 44 ausgebildet ist, im Vergleich zum Stand der Technik fein ausgebildet werden, da die übrigen Bereiche des Verriegelungselements 14 wenig durch die Kraft zum Halten des Gehäuses 12 an der Tragschiene 10 belastet werden.

Wie oben bereits ausgeführt, ist das Verriegelungselement 14 mittels Führungselementen 36 in Führungsnuten 34 am Gehäuse 12 gehalten und zum Verschieben von der Montagestellung in die Fixierstellung am Gehäuse 12 geführt. Wie in Fig. 4, 5 gezeigt, sind die Führungselemente 36 an zwei seitlichen Rahmenschenkeln 60 angeformt, die ihrerseits an dem Endbereich 38, der die Nut 40 mit der ersten Klemmfläche 28 und der zweiten Klemmfläche 44 aufweist, angeformt sind. An einem diesem Endbereich 38 gegenüberliegender Endbereich 62 sind die beiden Rahmenschenkel 60 miteinander über einen Endschenkel 64 miteinander verbunden. Mittels des Endschenkels 64 kann das Verriegelungselement 14 entweder von Hand oder mittels eines Werkzeuges wie beispielsweise einem Schraubenzieher, Zange oder eines eigens hierfür entwickelten Spezialwerkzeugs betätig werden, das heisst von der Montagestellung in die Fixierstellung beziehungsweise von der Fixierstellung in die Montagestellung bewegt werden. Weiter weist das Verriegelungselement ein Federelement 66 auf, welches im vorliegenden Beispiel aus demselben Material ausgebildet ist wie das Verriegelungselement 14. Alternativ kann dieses Federelement 66 auch aus einem separaten Teil bestehen und aus einem anderen Kunststoff oder Metall ausgebildet sein. Das Federelement 66 ist am Endbereich 38 angeformt und erstreckt sich in bekannter Art und Weise in einer Wellenform vom Endbereich 38 in Richtung des Endschenkels 64. Das Federelement 66 dient dazu, auf das Verriegelungselement 14 eine Kraft auszuüben, sodass das Verriegelungselement 14 in die Fixierstellung gedrängt wird. Dazu stützt sich das freie Ende des Federelements 66 am Gehäuse 12 ab. Die Länge des Verriegelungselements in Längsrichtung L des Gehäuses 12 ist gleich gross wie die Länge des Gehäuses 12, sodass das Verriegelungselements 14 in Längsrichtung L nicht über das Gehäuse 12 vor steht. Alternativ kann das Verriegelungselement in Längsrichtung L des Gehäuses schmaler als das Gehäuse ausgebildet sein.

### Bezugszeichenliste

- 10: Tragschiene
- 12: Gehäuse
- 14: Verriegelungselement
- 16: Montageplatte
- 18: Befestigungsarme
- 20, 20': Befestigungsplatte
- 22: Gegenanschlagfläche an der Tragschiene
- 24: Anschlagfläche am Gehäuse
- 26: erste Gegenklemmfläche an der Tragschiene
- 28: erste Klemmfläche am Verriegelungselement
- 30: Haltehaken
- 32: Nasenartiger Vorsprung
- 34: Führungsnuten
- 36: Führungselemente
- 38: Endbereich
- 40: Nut
- 44: zweite Klemmfläche am Verriegelungselement
- 46: Hakenartiger Bereich
- 48: Ausnehmung
- 50: zweite Gegenklemmfläche am Gehäuse
- 60: Rahmenschenkel
- 62: Endbereich
- 64: Endschenkel
- 66: Federelement
- L: Längsrichtung
- B: Richtung der Breite
- K: Haltekraft

## Patentansprüche

1. Gehäuse für ein elektrisches Installationsgerät, welches auf eine Tragschiene (10) aufrastbar ist und im auf die Tragschiene (10) aufgerasteten Zustand mit seiner Anschlagfläche (24) an eine Gegenanschlagfläche (22) der Tragschiene (10) anliegt, wobei zum Fixieren des Gehäuses (12) an der Tragschiene (10) ein Verriegelungselement (14) des Gehäuses von einer Montagestellung in eine Fixierstellung bewegt werden kann, und das Verriegelungselement (14) eine erste Klemmfläche (28) und eine zweite Klemmfläche (44) aufweist, wobei die erste Klemmfläche (28) zum Fixieren des Gehäuses (12) an der Tragschiene (10) die Gegenanschlagfläche (22) der Tragschiene (10) hintergreift, und die zweite Klemmfläche (44) die Anschlagfläche (24) des Gehäuses (12) hintergreift, wobei die erste Klemmfläche (28) und/oder die zweite Klemmfläche (44) bezüglich der Anschlagfläche zumindest annähernd parallel ausgerichtet oder in einem Öffnungswinkel von bis zu 10° geneigt ist, wobei zum Fixieren des Gehäuses (12) an der Tragschiene (10) die erste Klemmfläche (28) des Verriegelungselements (14) mit einer ersten Gegenklemmfläche (26) der Tragschiene (10) und die zweite Klemmfläche (44) des Verriegelungselements (14) mit einer zweiten Gegenklemmfläche (50) am Gehäuse zusammen wirkt, **dadurch gekennzeichnet dass** die zweite Gegenklemmfläche (50) am Gehäuse (12) durch einen Vorsprung (32) begrenzt ist, wobei dieser Vorsprung (32) sich in Richtung der Tragschiene (10) erstreckt und die Tragschiene (10) im aufgerasteten Zustand an diesen Vorsprung (32) seitlich anliegt.

2. Gehäuse für ein elektrisches Installationsgerät gemäss Anspruch 1, **dadurch gekennzeichnet, dass** durch das Verriegelungselement (14) in seiner Fixierstellung eine Haltekraft (K) derart ausgeübt wird, dass die Anschlagfläche (24) fest an die Gegenanschlagfläche (22) gepresst wird, und die erste Klemmfläche (28) und die zweite Klemmfläche (44) am Verriegelungselement (14) einander in Richtung der Haltekraft (K) gegenüberliegend angeordnet sind.

3. Gehäuse gemäss einem der Ansprüche 1 und 2, **dadurch gekennzeichnet, dass** das Verriegelungselement (14) eine Nut (40) aufweist, deren eine Flanke die erste Klemmfläche (28) und die andere Flanke die zweite Klemmfläche (44) bildet.

4. Gehäuse gemäss einem der Ansprüche 1 bis 3, **dadurch gekennzeichnet, dass** die erste Klemmfläche (28) und/oder die zweite Klemmfläche (44) bezüglich der Anschlagfläche in einem Winkel von bis zu 5° geneigt ist.

5. Gehäuse gemäss einem der Ansprüche 1 bis 3, **dadurch gekennzeichnet, dass** die erste Klemmfläche (28) und/oder die zweite Klemmfläche (44) bezüglich der Anschlagfläche in einem Winkel von bis zu 3° geneigt ist.

6. Gehäuse gemäss einem der Ansprüche 1 bis 5, **dadurch gekennzeichnet, dass** das Verriegelungselement (14) am Gehäuse (12) verschiebbar gehalten ist und falls das Gehäuse (12) auf die Tragschiene (10) aufgerastet ist, die Bewegungsrichtung des Verriegelungselement (14) quer zur Längsachse (L) der Tragschiene (10) verläuft.

7. Gehäuse gemäss einem der Ansprüche 1 bis 6, **dadurch gekennzeichnet, dass** das Verriegelungselement (14) am Gehäuse (12) verschiebbar gehalten ist und falls das Gehäuse (12) auf die Tragschiene (10) aufgerastet ist, die Bewegungsrichtung des Verriegelungselements quer zur Richtung der Haltekraft (K) verläuft.

8. Gehäuse gemäss einem der Ansprüche 1 bis 7, **dadurch gekennzeichnet, dass** der Vorsprung (32) im aufgerasteten Zustand von der ersten Klemmfläche (28) des Verriegelungselements (14) beabstandet ist.

9. Gehäuse gemäss einem der Ansprüche 1 bis 8, **dadurch gekennzeichnet, dass** das Gehäuse (12) einen starr ausgebildeter Haltehaken (30) an der Anschlagfläche (24) zum Hintergreifen einer der beiden Befestigungsplatten (20) aufweist.

10. Installationsgerät mit einem Gehäuse gemäss einem der Ansprüche 1 bis 9, insbesondere ein Gehäuse für Niederspannungsschaltgeräte.

## Claims

1. Housing for an electrical service device, which can be latched onto a mounting rail (10) and, in the state in which it is latched onto the mounting rail (10), bears with its stop face (24) against a mating stop face (22) of the mounting rail (10), it being possible for a locking element (14) of the housing to be moved from a fitting position into a fixing position for the purpose of fixing the housing (12) to the mounting rail (10), and the locking element (14) having a first clamping face (28) and a second clamping face (44), the first clamping face (28) engaging behind the mating stop face (22) of the mounting rail (10) for the purpose of fixing the housing (12) to the mounting rail (10), and the second clamping face (44) engaging behind the stop face (24) of the housing (12), the first clamping face (28) and/or the second clamping face (44) being aligned at least approximately parallel or being inclined at an opening angle of up to 10° with respect to the stop face, the first clamping face (28) of the locking element (14) interacting with a first mating clamping face (26) of the mounting rail (10) and the second clamping face (44) of the locking element (14) interacting with a second mating clamping face (50) on the housing for the purpose of fixing the housing (12) to the mounting rail (10), **characterized in that** the second mating clamping face (50) on the housing (12) is limited by a projection (32), this projection (32) extending in the direction of the mounting rail (10), and the mounting rail (10) bearing laterally against this projection (32) in the latched-on state.

2. Housing for an electrical service device according to Claim 1, **characterized in that** a retaining force (K) is exerted by the locking element (14) in its fixing position in such a way that the stop face (24) is pressed firmly against the mating stop face (22), and the first clamping face (28) and the second clamping face (44) are arranged on the locking element (14) opposite one another in the direction of the retaining force (K).

3. Housing according to either of Claims 1 and 2, **characterized in that** the locking element (14) has a groove (40), of which one flank forms the first clamping face (28) and the other flank forms the second clamping face (44).

4. Housing according to one of Claims 1 to 3, **characterized in that** the first clamping face (28) and/or the second clamping face (44) is inclined at an angle of up to 5° with respect to the stop face.

5. Housing according to one of Claims 1 to 3, **characterized in that** the first clamping face (28) and/or the second clamping face (44) is inclined at an angle of up to 3° with respect to the stop face.

6. Housing according to one of Claims 1 to 5, **characterized in that** the locking element (14) is held movably on the housing (12) and, if the housing (12) is latched onto the mounting rail (10), the movement direction of the locking element (14) extends transversely to the longitudinal axis (L) of the mounting rail (10).

7. Housing according to one of Claims 1 to 6, **characterized in that** the locking element (14) is held movably on the housing (12) and, if the housing (12) is latched onto the mounting rail (10), the movement direction of the locking element extends transversely with respect to the direction of the retaining force (K).

8. Housing according to one of Claims 1 to 7, **characterized in that** the projection (32) is spaced apart from the first clamping face (28) of the locking element (14) in the latched-on state.

9. Housing according to one of Claims 1 to 8, **characterized in that** the housing (12) has a rigid retaining hook (30) on the stop face (24) for engaging behind one of the two fastening plates (20).

10. Service device with a housing according to one of Claims 1 to 9, in particular a housing for low-voltage switching devices.

## Revendications

1. Boîtier pour un appareillage d'installation électrique qui peut être enclenché sur un rail porteur (10) et qui, lorsqu'il est enclenché sur le rail porteur (10), repose avec sa surface de butée (24) sur une surface de butée homologue (22) du rail porteur (10), un élément de verrouillage (14) du boîtier pouvant être déplacé d'une position de montage dans une position de fixation pour la fixation du boîtier (12) sur le rail porteur (10) et l'élément de verrouillage (14) présentant une première surface de serrage (28) et une deuxième surface de serrage (44), la première surface de serrage (28) venant en prise par l'arrière avec la surface de butée homologue (22) du rail porteur (10) pour fixer le boîtier (12) sur le rail porteur (10) et la deuxième surface de serrage (44) venant en prise par l'arrière avec la surface de butée (24) du boîtier (12), la première surface de serrage (28) et/ou la deuxième surface de serrage (44) étant alignées au moins approximativement en parallèle ou inclinées selon un angle d'ouverture maximum de 10° par rapport à la surface de butée, la première surface de serrage (28) de l'élément de verrouillage (14) interagissant avec une première surface de serrage homologue (26) du rail porteur (10) et la deuxième surface de serrage (44) de l'élément de verrouillage (14) interagissant avec une deuxième surface de serrage homologue (50) sur le boîtier en vue de la fixation du boîtier (12) sur le rail porteur (10), **caractérisé en ce que** la deuxième surface de serrage homologue (50) est délimitée sur le boîtier (12) par une partie en saillie (32), cette partie en saillie (32) s'étendant en direction du rail porteur (10) et le rail porteur (10), en position enclenchée, reposant latéralement contre cette partie en saillie (32).

2. Boîtier pour un appareillage d'installation électrique selon la revendication 1, **caractérisé en ce qu'**une force de maintien (K) est exercée par l'élément de verrouillage (14) dans sa position de fixation, de telle sorte que la surface de butée (24) est fermement comprimée contre la surface de butée homologue (22) et la première surface de serrage (28) ainsi que la deuxième surface de serrage (44) sur l'élément de verrouillage (14) sont disposées opposées l'une à l'autre dans le sens de la force de maintien (K).

3. Boîtier selon l'une des revendications 1 et 2, **caractérisé en ce que** l'élément de verrouillage (14) présente une rainure (40) dont l'un des flancs forme la première surface de serrage (28) et l'autre flanc la deuxième surface de serrage (44).

4. Boîtier selon l'une des revendications 1 à 3, **caractérisé en ce que** la première surface de serrage (28) et/ou la deuxième surface de serrage (44) sont inclinées selon un angle maximum de 5° par rapport à la surface de butée.

5. Boîtier selon l'une des revendications 1 à 3, **caractérisé en ce que** la première surface de serrage (28) et/ou la deuxième surface de serrage (44) sont inclinées selon un angle maximum de 3° par rapport à la surface de butée.

6. Boîtier selon l'une des revendications 1 à 5, **caractérisé en ce que** l'élément de verrouillage (14) est maintenu de manière coulissante sur le boîtier (12) et, dans le cas où le boîtier (12) est enclenché sur le rail porteur (10), le sens de déplacement de l'élément de verrouillage (14) s'étend transversalement à l'axe longitudinal (L) du rail porteur (10).

7. Boîtier selon l'une des revendications 1 à 6, **caractérisé en ce que** l'élément de verrouillage (14) est maintenu de manière coulissante sur le boîtier (12) et, dans le cas où le boîtier (12) est enclenché sur le rail porteur (10), le sens de déplacement de l'élément de verrouillage s'étend transversalement par rapport au sens de la force de maintien (K).

8. Boîtier selon l'une des revendications 1 à 7, **caractérisé en ce que** la partie en saillie (32), en position enclenchée, est espacée de la première surface de serrage (28) de l'élément de verrouillage (14).

9. Boîtier selon l'une des revendications 1 à 8, **caractérisé en ce que** le boîtier (12) présente un crochet de maintien (30) de configuration rigide sur la surface de butée (24) pour venir en prise par l'arrière avec l'une des deux plaques de fixation (20).

10. Appareillage d'installation avec un boîtier selon l'une des revendications 1 à 9, notamment un boîtier pour les appareillages de commutation à basse tension.
